# EUROPÄISCHE PATENTSCHRIFT

(11) **EP 0 698 528 B1**
(45) Veröffentlichungstag und Bekanntmachung des Hinweises auf die Patenterteilung: **28.04.1999**
(21) Anmeldenummer: 95112813.1
(22) Anmeldetag: 16.08.1995
(51) Int. Cl.: B60Q 1/32

(54) **Seitenwandmarkierungsleuchte**
Side indicator lights
Feux indicateurs de côté

(30) Priorität: 27.08.1994 DE 4430551
(43) Veröffentlichungstag der Anmeldung: 28.02.1996
(73) Patentinhaber: HAPPICH Fahrzeug- und Industrieteile GmbH, 42285 Wuppertal (DE)
(72) Erfinder: Poffo, Hans-Joachim, D-42285 Wuppertal (DE); Peter, Winfried, D-42553 Velbert (DE)

(56) Entgegenhaltungen:
- DE-A- 3 710 447
- DE-C- 943 337
- US-A- 5 144 538

## Beschreibung

Die Erfindung bezieht sich auf eine Seitenwandmarkierungsleuchte für Omnibusse.

Es bestehen Forderungen dahingehend, Omnibusse aus Gründen einer verbesserten Verkehrssicherheit zukünftig nicht nur im Front- und Heckbereich sondern auch an den Seitenwänden mit Markierungsleuchten auszustatten. Diese Forderung bringt natürlich Probleme hinsichtlich der Anordnung solcher Seitenwandmarkierungsleuchten mit sich.

Der Erfindung liegt die Aufgabe zugrunde, der gestellten Forderung gerecht zu werden und Vorsorge dafür zu treffen, daß die Anordnung von Seitenwandmarkierungsleuchten an Omnibussen ohne besonderen Aufwand, also einfach und insbesondere kostengünstig erfolgen kann.

Die erfindungsgemäße Lösung dieser Aufgabe besteht darin, eine Seitenwandmarkierungsleuchte für Omnibusse in einer Kofferklappengriffschale zu integrieren und um ein Auftragen bzw. Vorstehen von Bauteilen an einer Omnibusseitenwand zu vermeiden ist eine versenkte, flächenbündige Anordnung der Seitenwandmarkierungsleuchte in einem in der Kofferklappengriffschale ausgebildeten Aufnahmeraum vorgesehen.

Diese erfindungsgemäße Maßnahme bietet den Vorteil, ein ohnehin vorhandenes Bauteil in äußerst sinnvoller Weise mit einem weiteren Funktionselement zu versehen, womit das Einschneiden von zusätzlichen Öffnungen für die Aufnahme von Seitenwandmarkierungsleuchten in die Omnibusseitenwände und die sich daraus ergebenden Probleme wie Korrosion, Abdichtung u. dgl. von vorneherein vermieden wird. Die Kofferklappengriffschalen sind leicht zugänglich, so daß das Heranführen elektrischer Versorgungsleitungen für die Seitenwandmarkierungsleuchten keine besonderen Schwierigkeiten bereitet. Oftmals sind Kofferklappenverriegelungen bereits mit elektrischen Versorgungsleitungen ausgestattet, nämlich dann, wenn anstelle von pneumatischen Mitteln elektromotorische oder elektromagnetische Mittel für die Betätigung der Verriegelungseinrichtungen vorgesehen sind. Die elektrischen Versorgungsleitungen können dann ohne zusätzlichen Aufwand auch für die Stromversorgung der Seitenwandmarkierungsleuchten eingesetzt werden. Ein besonders vorteilhafter Nebeneffekt der erfindungsgemäßen Maßnahme ergibt sich durch die Wärmeabstrahlung der zu den Seitenwandmarkierungsleuchten gehörenden Lichtquellen, weil diese dazu genutzt werden kann einem Einfrieren der Kofferklappenverriegelungselemente, die sich ja ebenfalls im Kofferklappengriffschalenbereich befinden, entgegen zu wirken.

Es ist einsehbar, daß die Kofferklappengriffschale herkömmlicher Bauart einer Modifizierung für die Aufnahme der Seitenwandmarkierungsleuchte bedarf, was aber relativ einfach zu realisieren ist, weil es sich bei einer solchen in der Regel um ein Kunststoff-Spritzgußteil handelt, das durch eine Abänderung des Spritzgießwerkzeugs einfach anzupassen ist. Eine Modifizierung der Kofferklappengriffschale muß auch nicht zwangsläufig zu Abmessungsänderungen führen, was einer Nachrüstung entgegenstehen würde. Aus Gründen der problemlosen Nachrüstbarkeit von bereits im Einsatz befindlichen Omnibussen, sollten die Außenabmessungen herkömmlicher Kofferklappengriffschalen beibehalten werden.

Eine Weiterbildung der Erfindung kann darin bestehen, daß die Seitenwandmarkierungsleuchte als Komplettbauteil, bestehend aus Gehäuse, Streuscheibe, Lampenhalter nebst Lichtquelle, Reflektor und elektrischen Verbindungsleitungen nebst mit der allgemeinen Fahrzeugelektrik kuppelbaren Stecker ausgebildet und im Aufnahmehohlraum der Kofferklappengriffschale befestigt ist. Ein Komplettbauteil der genannten Art ist für die Heckanordnung an Omnibussen bekannt und kann im Handel bezogen werden. Die Montage eines solchen Komplettbauteils als Seitenwandmarkierungsleuchte beschränkt sich dann auf eine schraubgemäße oder bevorzugt auf eine klipsgemäße Befestigung an der Kofferklappengriffschale und auf die Herstellung einer elektrischen Verbindung für die Stromversorgung der Lichtquelle.

Die Erfindung läßt sich mit Vorteil aber auch dadurch verwirklichen, daß die Seitenwandmarkierungsleuchte in einem Aufnahmehohlraum der Kofferklappengriffschale angeordnet ist, wobei der Aufnahmehohlraum das Leuchtengehäuse bildet, in dem eine Leiterplatte mit elektrischen Kontakten für die Lichtquelle, Verbindungsleitungen mit Stecker und ein Reflektor angeordnet sind und wobei der Aufnahmehohlraum eine durch eine Streuscheibe gebildete Abdeckung aufweist. Durch diese Maßnahme wird ein zusätzliches Leuchtengehäuse, wie es bei einem Komplettbauteil vorhanden ist, eingespart, wodurch sich die Gesamtkosten für die Seitenmarkierungsleuchte minimieren lassen.

Es empfiehlt sich, eine Streuscheibe vorzusehen, die einen direkten hinterleuchteten Bereich und zumindest einen indirekten, gegenüber der Lichtquelle abgeschotteten Bereich (Katzenauge) aufweist. Die Lichtabschottung kann ggf. aus einer im Leuchtengehäuse angeordneten Zwischenwand bestehen.

Ausführungsbeispiele der Erfindung werden nachfolgend anhand der Zeichnung näher erläutert, und es zeigen:
- Fig. 1: eine Ansicht einer Kofferklappengriffschale mit integrierter Seitenwandmarkierungsleuchte,
- Fig. 2: eine gegenüber Fig. 1 abgewandelte Ausführungsform einer Kofferklappengriffschale mit integrierter Seitenwandmarkierungsleuchte und
- Fig. 3: einen Schnitt III-III nach Fig. 2.

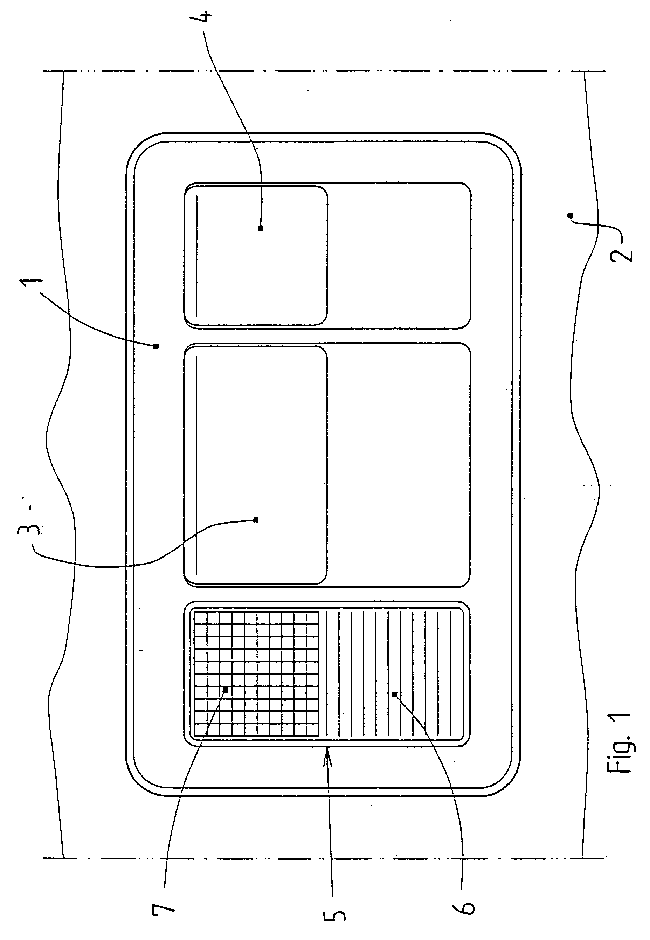

Die in Fig. 1 gezeigte Kofferklappengriffschale 1 ist an einer Kofferklappe 2, die in herkömmlicher Weise an einer Omnibusseitenwand angelenkt ist, befestigt. Die Kofferklappengriffschale 1 ist mit einem Griffzug 3, einer Schloßabdeckung 4 und mit der Besonderheit einer Seitenwandmarkierungsleuchte, von der lediglich die Streuscheibe 5 mit einem direkt hinterleuchteten Bereich, Leuchtfläche 6 und indirektem Bereich, Katzenauge 7 sichtbar ist. Die Seitenwandmarkierungsleuchte, deren Aufbau im einzelnen nicht beschrieben wird, befindet sich an einem Endbereich der im wesentlichen rechteckigen Kofferklappengriffschale 1 und erstreckt sich vertikal. Wie Fig. 1 noch erkennen läßt, besitzt die Seitenwandmarkierungsleuchte eine versenkte, flächenbündige Anordnung in einem in Fig. 1 nicht näher dargestellten Aufnahmehohlraum der Kofferklappengriffschale 1.

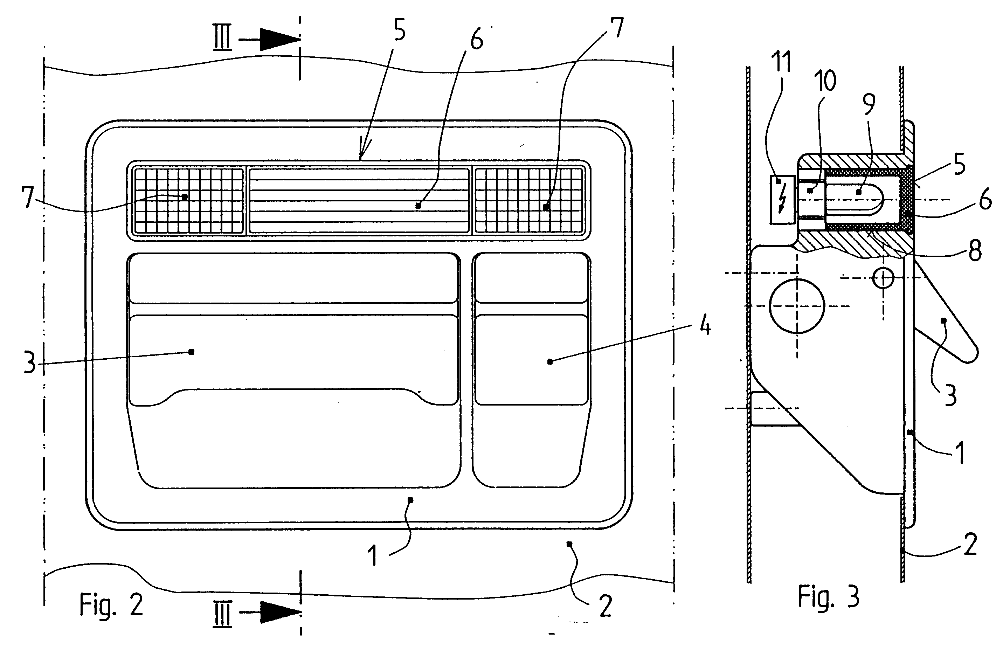

Beim Ausführungsbeispiel nach Fig. 2 und 3 ist die Kofferklappengriffschale 1, wiederum in einer aus Fig. 3 ersichtlichen Weise an einer Kofferklappe 2 angeordnet und mit einem Griffzug 3, einer Schloßabdeckung 4 sowie mit der Besonderheit einer Seitenwandmarkierungsleuchte bestückt. Die Seitenwandmarkierungsleuchte erstreckt sich hier in horizontaler Ausrichtung oberhalb des Griffzugs 3 und der Schloßabdeckung 4. Die Seitenwandmarkierungsleuchte weist eine mittige Leuchtfläche 8 und links und rechts daneben angeordnete Katzenaugen 7 auf.

Fig. 3 läßt erkennen, daß die Kofferklappengriffschale 1 einen Aufnahmehohlraum 8 für die versenkte, flächenbündige Anordnung der Seitenwandmarkierungsleuchte aufweist. Im Aufnahmehohlraum 8 befindet sich auch die Lichtquelle in Form einer Glühlampe 9 oder einer nicht gezeigten Soffitte. Mit 10 ist eine Lampenhalterung und mit 11 eine elektrische Verbindungseinrichtung bezeichnet. Der Leuchtenaufbau ist im einzelnen nicht dargestellt, da man insoweit auf Kaufteile und hinreichend bekannte Einzelelemente zurückgreifen kann.

Durch die Integration einer Seitenwandmarkierungsleuchte in eine Kofferklappengriffschale tritt für letztere keine wesentliche Verteuerung ein, obgleich diese dadurch eine wesentliche Funktionserweiterung und nicht zuletzt eine besonders ansprechende optische Aufwertung erfährt.

Die Integration der Seitenwandmarkierungsleuchte in der Kofferklappengriffschale soll natürlich auch die Möglichkeit ihrer Anordnung am Griffzug 3 und/oder ggf. auch an der Schloßabdeckung 4 einschließen. Dabei kann z. B. der Griffzug 3 die Leuchtfläche 8 und die Schloßabdeckung 4 das Katzenauge 7 aufweisen.

## Patentansprüche

1. Seitenwandmarkierungsleuchte für Omnibusse gekennzeichnet durch ihre Integration in einer Kofferklappengriffschale (1) und durch ihre versenkte, flächenbündige Anordnung in einem in der Kofferklappengriffschale (1) ausgebildeten Aufnahmehohlraum (8).

2. Seitenwandmarkierungsleuchte nach Anspruch 1, dadurch gekennzeichnet, daß dieselbe als Komplettbauteil, bestehend aus Gehäuse, Streuscheibe (5), Lampenhalter (10) nebst Lichtquelle (8) Reflektor und elektrischen Verbindungsleitungen nebst mit der allgemeinen Fahrzeugelektrik kuppelbaren Stecker ausgebildet und im Aufnahmehohlraum (8) der Kofferklappengriffschale (1) befestigt ist.

3. Seitenwandmarkierungsleuchte nach Anspruch 1, dadurch gekennzeichnet, daß der Aufnahmehohlraum (8) das Leuchtengehäuse bildet, in dem eine Leiterplatte mit elektrischen Kontakten für die Lichtquelle (9), Verbindungsleitungen mit Stecker und ein Reflektor angeordnet ist und daß der Aufnahmehohlraum (8) eine durch eine Streuscheibe (5) gebildete Abdeckung aufweist.

4. Seitenwandmarkierungsleuchte nach Anspruch 3, dadurch gekennzeichnet, daß die Streuscheibe (5) einen direkten hinterleuchteten Bereich (6) und zumindest einen indirekten, gegenüber der Lichtquelle (9) abgeschotteten Bereich (7) aufweist.

## Claims

1. Side wall marking light for buses, characterized by its integration in a boot-lid handle shell (1) and by its recessed, flush arrangement in a receiving cavity (8) formed in the boot-lid handle shell (1).

2. Side wall marking light according to Claim 1, characterized in that the said light is designed as a complete component consisting of housing, lens (5), lamp holder (10), together with light source (9), reflector and electrical connecting lines, together with a plug which can be connected to the general vehicle electrical system, and is fastened in the receiving cavity (8) in the boot-lid handle shell (1).

3. Side wall marking light according to Claim 1, characterized in that the receiving cavity (8) forms the light housing in which a printed circuit board having electrical contacts for the light source (9), connecting lines with a plug and a reflector is arranged, and in that the receiving cavity (8) has a cover formed by a lens (5).

4. Side wall marking light according to Claim 3, characterized in that the lens (5) has a direct, rear-lit region (6) and at least one indirect region (7) which is partitioned off from the light source (9).

## Revendications

1. Feu indicateur de côté pour autocars,
caractérisé par
- son intégration dans une coquille de poignée de porte de coffre (1), et
- sa disposition renfoncée, à fleur de la surface, dans une cavité de réception (8) constituée dans la coquille de poignée de porte de coffre (1).

2. Feu indicateur de côté selon la revendication 1,
caractérisé en ce que
ce feu est réalisé sous forme d'un composant complet constitué du carter, du diffuseur (5), du support de lampe (10) outre la source de lumière (8), du réflecteur et de lignes électriques de liaison, outre le connecteur qui peut être couplé électriquement au circuit électrique général du véhicule et qui est fixé dans la cavité de réception (8) de la coquille de poignée de porte de coffre (1).

3. Feu indicateur de côté selon la revendication 1,
caractérisé en ce que
- la cavité de réception (8) forme le boîtier du feu dans lequel sont disposés une carte de circuit imprimé avec des contacts électriques pour la source de lumière (9), des lignes de liaison avec le connecteur et un réflecteur, et
- la cavité de réception (8) présente un recouvrement formé par un diffuseur (5).

4. Feu indicateur de côté selon la revendication 3,
caractérisé en ce que
le diffuseur (5) présente une zone (6) directe éclairée par l'arrière, et au moins une zone (7) indirecte, cloisonnée par rapport à la source de lumière (9).
